## Europäisches Patentamt

## European Patent Office

## Office européen des brevets

(19)

(11) Publication number : **0 423 876 B1**

# EUROPEAN PATENT SPECIFICATION

(12)

(45) Date of publication of patent specification :
23.02.94 Bulletin 94/08

(51) Int. Cl.⁵ : **C10G 11/18**

(21) Application number : **90202703.6**

(22) Date of filing : **11.10.90**

(54) **Process for the catalytic cracking of a hydrocarbon oil.**

The file contains technical information
submitted after the application was filed and
not included in this specification

(30) Priority : **17.10.89 GB 8923345**

(43) Date of publication of application :
**24.04.91 Bulletin 91/17**

(45) Publication of the grant of the patent :
**23.02.94 Bulletin 94/08**

(84) Designated Contracting States :
**AT BE CH DE ES FR GB IT LI NL SE**

(56) References cited :
**EP-A- 0 239 171**
**EP-A- 0 318 185**
**US-A- 3 812 029**

(73) Proprietor : **SHELL INTERNATIONALE
RESEARCH MAATSCHAPPIJ B.V.**
**Carel van Bylandtlaan 30**
**NL-2596 HR Den Haag (NL)**

(72) Inventor : **Khouw, Frank Hsian Hok**
**Carel van Bylandtlaan 30**
**NL-2596 HR The Hague (NL)**
Inventor : **Nieskens, Martin Jean Pierre**
**Cornelis**
**Carel van Bylandtlaan 30**
**NL-2596 HR The Hague (NL)**
Inventor : **Spiessens, Marinus Johannes**
**Carel van Bylandtlaan 30**
**NL-2596 HR The Hague (NL)**
Inventor : **Woudstra, Jouke Jan**
**Carel van Bylandtlaan 30**
**NL-2596 HR The Hague (NL)**

EP 0 423 876 B1

## Description

PROCESS FOR THE CATALYTIC CRACKING OF A HYDROCARBON OIL

The present invention relates to a process for introducing a hydrocarbon oil into a catalytic cracking reactor.

US 3,812,029 discloses a device located in the base wall of a catalytic cracking reactor comprising an inner tube for introducing hydrocarbon oil feed, a concentric outer tube for introducing steam and atomising gas, each tube terminated at the downstream end by a nozzle, the outer tube projecting further into the reactor than the inner tube. The device is designed to prevent feed coking the nozzles where the feed nozzle is protected from the full heat of the reactor and the feed is carried into the catalyst zone without contacting the reactor walls. No mention is made of improved atomising power of the nozzle.

EP-A-0 239 171 discloses a process and apparatus for mixing hydrocarbon feed and atomising gas prior to introduction into a catalytic cracking reactor, the apparatus comprising a tubular mixing section having in its upstream end and annular inlet opening for the hydrocarbon feed defined inside coaxially arranged inlet means for atomising gas, and an outlet opening for the mixture. The feed is atomised on contact with the surrounding gas stream and introduced into the reactor as a spray of droplets.

EP-A-0 318 185 discloses an apparatus for introducing hydrocarbon feed into the riser section of a fluid catalytic cracking unit, which apparatus includes an in-line steam ring atomizer and an enlarged section downstream from the atomizer. The steam ring atomizer is fed from a steam line by which steam is introduced into an annular space around a feed conduit and is introduced into the feed conduit parallel to the feed flow via a ring orifice.

The present invention provides to a process for the catalytic cracking of a hydrocarbon oil wherein a gas/hydrocarbon oil mixture is introduced into the reactor by means of at least one device which comprises at least one supply means of which the wall comprises openings, the hydrocarbon oil is introduced into the supply means and mixed therein with a substantially surrounding gas which enters under pressure the supply means through the openings in the wall thereof.

In this way the hydrocarbon oil is advantageously mixed with the gas before entering the reactor. As a result thereof an optimum distribution of hydrocarbon oil over the catalyst particles is obtained when the hydrocarbon oil is contacted with the catalyst particles in the reactor. Thus an excellent performance of a catalytic cracking unit can be established.

It has been found that suitable mixing of the hydrocarbon oil and the gas can be attained if the gas/hydrocarbon oil mixture comprises gas in an amount of 0.1-50 %wt on hydrocarbon oil, preferably 1-15 %wt on hydrocarbon oil.

Preferably, the mixing of the hydrocarbon oil and the gas is carried out in such a way that the gas/hydrocarbon oil flow velocity (m/s) ratio is in the range of 2-30, whereby the gas flow velocity is defined as the the velocity of the gas calculated in the openings in the wall of the supply means. Preferably, the gas/hydrocarbon oil flow ratio is in the range of 5-15.

The process according to the present invention is preferably carried out in such a way that the pressure of the gas entering the supply means is in the range of $2 \times 10^5 - 5 \times 10^5$ Pa (2-15 bar), preferably in the range of $5 \times 10^5 - 10 \times 10^5$ Pa (5-10 bar). Suitably, the gas/hydrocarbon oil mixture enters the reactor with a velocity of 20-400 m/s. In the process according to the present invention various gases can be applied. The gases which can suitably be applied in the process according to the present invention comprise for instance the hydrocarbon gases comprising four or less carbon atoms, refinery gases (including $H_2S$), steam and/or any mixture thereof. Preferably, use is made of steam.

Suitably, the present process is carried out using a device for the introduction of the hydrocarbon oil which comprises more than one supply means as described hereinbefore.

Suitably, the upstream end of the device for introducing the hydrocarbon oil is located above an inlet means for introducing catalyst particles.

The openings in the supply means of the device to be used in the process according to the present invention are suitably located near the upstream end of of the supply means.

Suitably, the openings are substantially regularly arranged in at least one plane perpendicular to the central longitudinal axis of the supply means. Preferably, the openings are symmetrically arranged in said plane(s). Preferably, at least 4 openings are symmetrically arranged in said plane(s).

Suitably, the device as applied in the process according to the present invention comprises tubular supply means.

In a preferred embodiment of the process according to the present invention the hydrocarbon oil is introduced by means of more than one device as described hereinbefore, for instance by four of these devices.

If the hydrocarbon oil is introduced by means of more than one device, the devices are suitably substan-

2

tially regularly arranged in at least one plane perpendicular to the central longitudinal axis of the reactor. Preferably, the devices are symmetrically arranged in said plane(s). Suitably, at least 4 devices are symmetrically arranged in said plane(s). Suitably, the devices are arranged in at least two of said planes. If the devices are arranged in more than two of said planes, the planes are suitably substantially regularly spaced from each other along the length of the reactor. Preferably, the planes are arranged at substantially equal distances from each other. Suitably, all the planes comprise the same number of devices. Preferably, the devices are arranged in each plane in such a way that the devices of two neighbouring planes are staggeredly arranged with respect to each other.

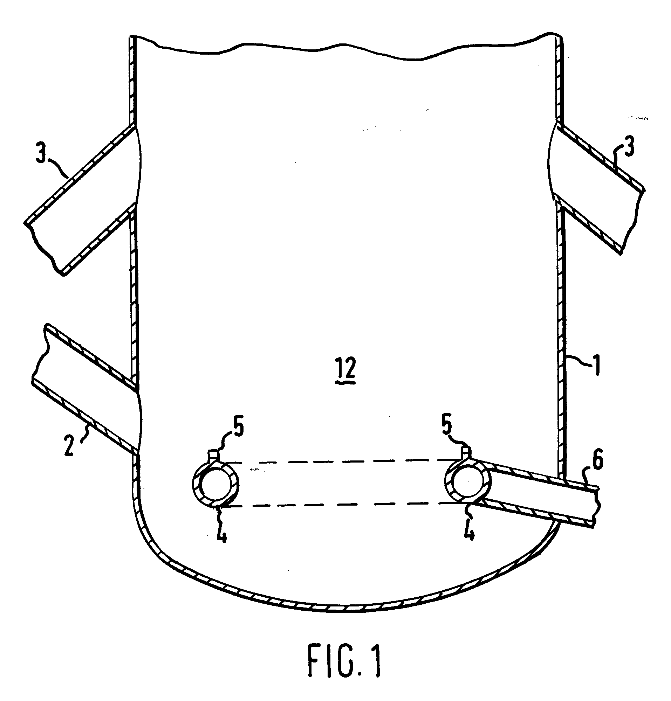

The bottom part of a riser reactor comprising the device to be used in the process according to the present invention and suitable embodiments of said device for introducing the hydrocarbon oil into the reactor are described hereinafter, using Figures 1-3 in which reference numerals relating to corresponding parts are the same.

In Figure 1 a longitudinal section of the bottom part of a fluid catalytic cracking riser reactor is schematically shown which can suitably be used in the process according to the present invention.

In Figure 2 a longitudinal section of the upstream end part of the device for introducing the hydrocarbon oil into the reactor as depicted in Figure 1 is schematically shown in more detail.

In Figure 3 a cross-section at AA' of the device as depicted in Figure 2 is schematically shown.

The bottom part of the fluid catalytic cracking riser reactor as depicted in Figure 1 comprises a substantially vertical vessel (1) provided with an inlet means (2) for introducing catalyst particles, and four devices (3) (of which only two have been shown) for introducing hydrocarbon oil into the riser reactor. The riser reactor furthermore preferably comprises fluidization means (4), for instance in the form of a ring-shaped or annular fluidization means, provided with regularly spaced fluidization gas openings (e.g. nozzles (5)) through which a fluidization gas, for instance steam, introduced via fluidization gas inlet means (6) emanates into the bottom section (12) of the reactor.

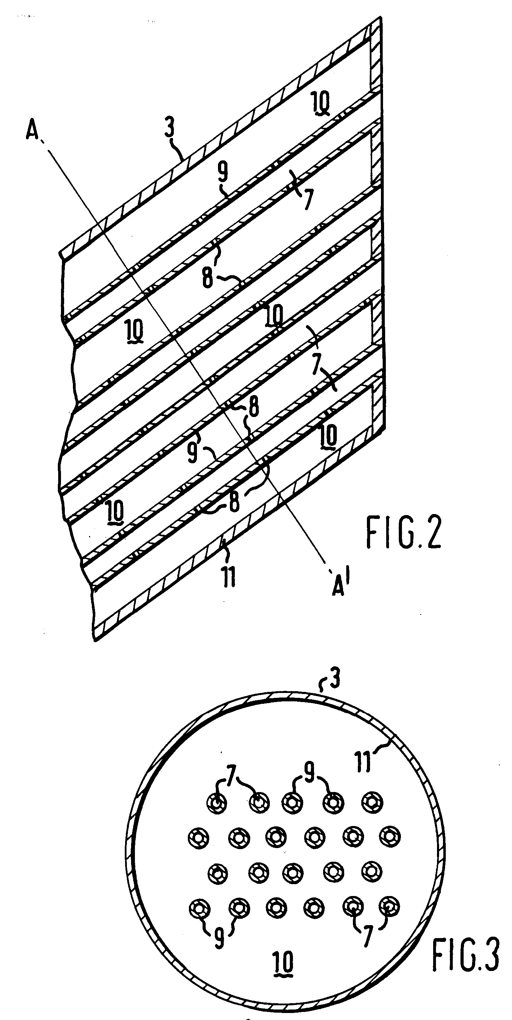

In Figures 2 and 3 the upstream end part of the device (3) for introducing the hydrocarbon oil into the reactor is shown in more detail. The device (3) comprises tubular supply means (7) having openings (8) in their walls (9), and a space (10) arranged between the tubular supply means (7) and wall (11) of the device (3).

The process according to the present invention using the riser reactor of which only the bottom part is shown in Figure 1 is normally carried out as follows.

A stream of catalyst particles in a carrier gas (e.g. originating from a catalyst regenerator) is introduced through inlet means (2) into the bottom section (12) of the riser reactor. The catalyst particles are fluidized and transported upwardly by means of for instance steam introduced via line (6) into ring-shaped or annular fluidization means (4) provided with regularly spaced fluidization nozzles (5). A stream of a hydrocarbon oil is introduced into supply means (7) of the device (3) and mixed with a stream of steam which enters from space (10) under pressure with a high velocity the supply means (7). The upwardly flowing fluidized mass of catalyst particles is excellently mixed with the mixture of the hydrocarbon oil and steam obtained emanating with a high velocity from device (3).

The use of device (3) in the process according to the present invention results in a very uniform mixing of the fluidized catalyst particles and the hydrocarbon oil. As a result of this uniform mixing a very attractive performance of the catalytic cracking unit can be obtained.

In Figure 1 the devices (3) are arranged onto the wall of the vessel (1). It will be understood, however, that the device(s) (3) can also suitably be arranged differently, for instance substantially centrally in the bottom section (12) of the riser reactor or at other suitable places in the riser reactor or stripping zone of a catalytic cracking reactor.

In Figures 2 and 3 the tubular supply means (7) are arranged parallel with respect to each other. It will be clear, however, that the supply means (7) can also suitably arranged in a different manner, for instance the supply means (7) may diverge from each other in the direction of the upstream end of the device (3).

The mixing of the gas and the hydrocarbon oil in the supply means (7) is preferably carried out at temperatures in the range of 50-600°C, more preferably in the range from 100-400°C.

The process for the catalytic cracking of a hydrocarbon oil according to the present invention is preferably carried out at a temperature from 400-800 °C and pressures from $1 \times 10^5$ - $10 \times 10^5$ Pa (1-10 bar). It will be understood that the present process can suitably be carried out using any fluidized catalytic cracking catalyst, however, zeolite-containing catalysts are preferred.

The hydrocarbon oil which can suitably be converted in the process according to the present invention comprises heavy hydrocarbon oils, for instance atmospheric or vacuum distillates, cycle oils and slurry oils, deasphalted oils, atmospheric and vacuum residues, thermally cracked residues, asphalts originating from various kinds of deasphalting processes, synthetic residues and hydrocarbon oils originating from hydroconversion processes, tar sands and shale oils of any source, and/or any mixture thereof.

3

The present invention is illustrated by means of the following Example.

Example

A feed stream of a straight run heavy hydrocarbon oil (a Conradson carbon content of about 5 %wt) enters supply means (7) of the riser reactor as partly depicted in Figure 1 at a temperature of 260 °C and is mixed in the supply means (7) with a stream of steam, which enters space (10) at a temperature of 260 °C and a pressure of 6 bar. The resulting oil/steam mixture flows with a velocity of more than 70 m/s through the upstream end of supply means (7) into the reactor vessel (1), which is operated at a pressure of $3 \times 10^5$ Pa (3 bar) and a temperature of 520 °C. Regenerated zeolite Y based catalyst particles are introduced via inlet (2) at a temperature of 705 °C into the reactor vessel (1) wherein the catalyst particles are contacted with the oil/steam mixture.

The product yields on feed obtained in the above Example are summarized in the Table as shown hereinbelow.

## Table

### product yields

| | | |
|---|---|---|
| $C_1-C_4$ | %wt | 17.8 |
| $C_5-221°C$ | %wt | 51.0 |
| 221-370°C | %wt | 17.0 |
| $370°C^+$ | %wt | 7.2 |
| coke | %wt | 7.0 |

It will be clear from the results presented in the Table shown hereinabove, indicating an attractive yield of products in the gasoline range, that a heavy hydrocarbon oil can very suitably be subjected to the process according to the present invention.

## Claims

1. Process for the catalytic cracking of a hydrocarbon oil wherein a gas/hydrocarbon oil mixture is introduced into the reactor by means of at least one device which comprises at least one supply means of which the wall comprises openings, the hydrocarbon oil is introduced into the supply means and mixed therein with a substantially surrounding gas which enters under pressure the supply means through the openings in the wall thereof.

2. Process according to claim 1, wherein the gas/hydrocarbon oil mixture comprises gas in an amount of 0.1-50 %wt on hydrocarbon oil.

3. Process according to claim 2, wherein the gas/hydrocarbon oil mixture comprises gas in an amount of 1-15 %wt on hydrocarbon oil.

4. Process according to any one of claims 1-3, wherein the gas/hydrocarbon oil flow velocity ratio is in the range of 2-30 and the gas flow velocity has the meaning as described hereinbefore.

5. Process according to claim 4, wherein the gas/hydrocarbon oil flow velocity ratio is in the range of 5-15.

6. Process according to any one of claims 1-5, wherein the pressure of the gas entering the supply means is in the range of $2 \times 10^5$ - $15 \times 10^5$ Pa (2-15 bar) abs.

7. Process according to claim 6, wherein the pressure of the gas entering the supply means is in the range of $5 \times 10^5$ - $10 \times 10^5$ Pa (5-10 bar) abs.

8. Process according to any one of claims 1-7, wherein the gas/hydrocarbon oil mixture enters the reactor with a velocity of 20-400 m/s.

9. Process according to any one of claims 1-8, wherein the gas comprises steam.

10. Process according to any one of claims 1-9, wherein the device comprises more than one supply means.

11. Process according to any one of claims 1-10, wherein the upstream end of the device for introducing the hydrocarbon oil is located above an inlet means for introducing catalyst particles.

12. Process according to any one of claims 1-11, wherein the openings in the wall of the supply means are located near the upstream end of the supply means.

13. Process according to any one of claims 1-12, wherein the openings are substantially regularly arranged in at least one plane perpendicular to the central longitudinal axis of the supply means.

14. Process according to claim 13, wherein the openings are symmetrically arranged in the plane(s) perpendicular to the central longitudinal axis of the supply means.

15. Process according to any one of claims 1-14, wherein the device(s) comprise(s) tubular supply means.

16. Process according to any one of claims 1 to 19, wherein the hydrocarbon oil is introduced into the reactor by means of more than one device as described hereinbefore.

17. Process according to claim 16, wherein the devices are substantially regularly arranged in at least one plane perpendicular to the central longitudinal axis of the reactor.

18. Process according to claim 17, wherein the devices are arranged in at least two planes.


**Patentansprüche**

1. Verfahren zum katalytischen Cracken eines Kohlenwasserstofföls, worin ein Gas/Kohlenwasserstofföl-Gemisch mittels wenigstens einer Vorrichtung in den Reaktor eingeführt wird, die wenigstens eine Speiseeinrichtung umfaßt, deren Wand Öffnungen aufweist, wobei das Kohlenwasserstofföl in die Speiseeinrichtung eingeführt und darin mit einem im wesentlichen umgebenden Gas vermischt wird, das unter Druck in die Speiseeinrichtung durch die in deren Wand vorgesehenen Öffnungen eintritt.

2. Verfahren nach Anspruch 1, worin das Gas/Kohlenwasserstofföl-Gemisch das Gas in einer Menge von 0,1 bis 50 Gew.-%, bezogen auf Kohlenwasserstofföl, umfaßt.

3. Verfahren nach Anspruch 2, worin das Gas/Kohlenwasserstofföl-Gemisch das Gas in einer Menge von 1 bis 15 Gew.-%, auf Kohlenwasserstofföl bezogen, umfaßt.

4. Verfahren nach einem der Ansprüche 1 bis 3, worin das Verhältnis der Gasströmungsgeschwindigkeit/Kohlenwasserstofföl-Strömungsgeschwindigkeit im Bereich von 2 bis 30 liegt und die Gasströmungsgeschwindigkeit die zuvor angegebene Bedeutung aufweist.

5. Verfahren nach Anspruch 4, worin das Gas/Kohlenwasserstofföl-Strömungsgeschwindigkeitsverhältnis im Bereich von 5 bis 15 liegt.

6. Verfahren nach einem der Ansprüche 1 bis 5, worin der Druck des in die Speiseeinrichtung eintretenden Gases im Bereich von $2 \times 10^5$ bis $15 \times 10^5$ Pa (2 bis 15 bar) absolut liegt.

7. Verfahren nach Anspruch 6, worin der Druck des in die Speiseeinrichtung eintretenden Gases im Bereich von $5 \times 10^5$ bis $10 \times 10^5$ Pa (5 bis 10 bar) absolut liegt.

8. Verfahren nach einem der Ansprüche 1 bis 7, worin das Gas/Kohlenwasserstofföl-Gemisch in den Reaktor mit einer Geschwindigkeit von 20 bis 400 m/s eintritt.

9. Verfahren nach einem der Ansprüche 1 bis 8, worin das Gas Dampf umfaßt.

5

**10.** Verfahren nach einem der Ansprüche 1 bis 9, worin die Vorrichtung mehr als eine Speiseeinrichtung umfaßt.

**11.** Verfahren nach einem der Ansprüche 1 bis 10, worin das stromaufwärtige Ende der Vorrichtung zum Einführen des Kohlenwasserstofföls oberhalb eines Einlaßmittels zum Einführen von Katalysatorteilchen angeordnet ist.

**12.** Verfahren nach einem der Ansprüche 1 bis 11, worin die Öffnungen in der Wand der Speiseeinrichtung nahe dem stromaufwärtigen Ende der Speiseeinrichtung angeordnet sind.

**13.** Verfahren nach einem der Ansprüche 1 bis 12, worin die Öffnungen im wesentlichen gleichförmig in wenigstens einer, zur zentralen Längsachse der Speiseeinrichtung senkrechten Ebene angeordnet sind.

**14.** Verfahren nach Anspruch 13, worin die Öffnungen symmetrisch in der zur zentralen Längsachse der Speiseeinrichtung senkrechten Ebene bzw. in entsprechenden senkrechten Ebenen angeordnet sind.

**15.** Verfahren nach einem der Ansprüche 1 bis 14, worin die Vorrichtung bzw. die Vorrichtungen rohrförmige Speiseeinrichtungen umfaßt bzw. umfassen.

**16.** Verfahren nach einem der Ansprüche 1 bis 15, worin das Kohlenwasserstofföl mittels mehr als einer, wie vorstehend beschriebenen Vorrichtung in den Reaktor eingeführt wird.

**17.** Verfahren nach Anspruch 16, worin die Vorrichtungen im wesentlichen regelmäßig in wenigstens einer, zur zentralen Längsachse des Reaktors senkrechten Ebene angeordnet sind.

**18.** Verfahren nach Anspruch 17, worin die Vorrichtungen in wenigstens zwei Ebenen angeordnet sind.


**Revendications**

**1.** Procédé pour le craquage catalytique d'une huile d'hydrocarbures, dans lequel un mélange de gaz/huile d'hydrocarbures est introduit dans le réacteur au moyen d'au moins un dispositif qui comporte au moins un moyen d'alimentation dont la paroi comporte des ouvertures, l'huile d'hydrocarbures est introduite dans le moyen d'alimentation et y mélangée avec un gaz l'entourant complètement qui pénètre sous pression dans le moyen d'alimentation par les ouvertures prevues dans sa paroi.

**2.** Procédé selon la revendication 1, dans lequel le mélange gaz/huile d'hydrocarbures comporte du gaz en une quantite de 0,1 a 50% en poids par rapport a l'huile d'hydrocarbures.

**3.** Procédé selon la revendication 2, dans lequel le mélange gaz/huile d'hydrocarbures comporte du gaz en une quantite de 1 a 15% en poids, par rapport à l'huile d'hydrocarbures.

**4.** Procédé selon l'une quelconque des revendications 1 à 3, dans lequel le rapport de vitesses d'écoulement gaz/huile d'hydrocarbures se situe dans la gamme de 2 à 30 et la vitesse d'écoulement du gaz a la signification telle que spécifiée ci-dessus.

**5.** Procédé selon la revendication 4, dans lequel le rapport de vitesses d'écoulement gaz/huile d'hydrocarbures se situe dans la gamme de 5 a 15.

**6.** Procédé selon l'une quelconque des revendications 1 à 5, dans lequel la pression du gaz penetrant dans les moyens d'alimentation se situe dans la gamme de $2 \times 10^5$ à $15 \times 10^5$ Pa (2-15 bars) abs.

**7.** Procédé selon la revendication 6, dans lequel la pression du gaz penetrant dans les moyens d'alimentation se situe dans la gamme de $5 \times 10^5$ à $10 \times 10^5$ Pa (5 à 10 bars) abs.

**8.** Procédé selon l'une quelconque des revendications 1 à 7, dans lequel le mélange gaz/huile d'hydrocarbures pénètre dans le réacteur avec une vitesse de 20 à 400 m/s.

**9.** Procédé selon l'une quelconque des revendications 1 à 8 dans lequel le gaz comporte de la vapeur.

10. Procédé selon l'une quelconque des revendications 1 à 9, dans lequel le dispositif comporte plus d'un moyen d'alimentation.

11. Procédé selon l'une quelconque des revendications 1 à 10, dans lequel la zone d'extrémité amont du dispositif destiné à l'introduction de l'huile d'hydrocarbures est située au dessus d'un moyen d'admission pour introduire les particules de catalyseur.

12. Procédé selon l'une quelconque des revendications 1 à 11, dans lequel les ouvertures dans la paroi des moyens d'alimentation sont disposées près de la zone d'extrémité amont des moyens d'alimentation.

13. Procédé selon l'une quelconque des revendications 1 à 12, dans lequel les ouvertures sont agencées de façon sensiblement régulière dans au moins un plan perpendiculaire à l'axe longitudinal central des moyens d'alimentation.

14. Procédé selon la revendication 13, dans lequel les ouvertures sont symétriquement agencées dans le (les) plan(s) perpendiculaires à l'axe longitudinal central des moyens d'alimentation.

15. Procédé selon l'une quelconque des revendications 1 à 14, dans lequel le(les) dispositif(s) comporte(nt) des moyens d'alimentation tubulaire.

16. Procédé selon l'une quelconque des revendications 1 à 19 dans lequel l'huile d'hydrocarbures est introduite dans le réacteur au moyen de plus d'un dispositif tel que décrit ci-dessus.

17. Procédé selon la revendication 16, dans lequel les dispositifs sont agencés de façon sensiblement régulière dans au moins un plan perpendiculaire à l'axe longitudinal central du réacteur.

18. Procédé selon la revendication 17, dans lequel les dispositifs sont agencés dans au moins deux plans.

FIG. 1

FIG.2

FIG.3

9